(19) **Europäisches Patentamt**

**European Patent Office**

**Office européen des brevets**

(11) Veröffentlichungsnummer: **0 286 859**
**B1**

(12) **EUROPÄISCHE PATENTSCHRIFT**

(51) Int. Cl.⁵: **B60F 3/00, B63B 35/79**

(45) Veröffentlichungstag der Patentschrift:
**09.05.90**

(21) Anmeldenummer: **88104230.3**

(22) Anmeldetag: **17.03.88**

(54) **Als Surfbrett ausgebildete Fortbewegungsvorrichtung.**

(30) Priorität: **13.04.87 DE 8705560 U**

(43) Veröffentlichungstag der Anmeldung:
**19.10.88 Patentblatt 88/42**

(45) Bekanntmachung des Hinweises auf die Patenterteilung:
**09.05.90 Patentblatt 90/19**

(84) Benannte Vertragsstaaten:
**AT BE CH DE ES FR GB GR IT LI LU NL SE**

(56) Entgegenhaltungen:
**WO-A-80/00146**
**DE-A- 3 339 883**
**DE-U- 8 705 560**
**FR-A- 2 411 117**
**FR-A- 2 448 988**
**FR-A- 2 529 525**
**FR-A- 2 537 508**

(73) Patentinhaber: **Eibel, Karl-Heinz, Heisenbergstrasse 19,**
**D-5014 Kerpen-Türnich(DE)**

(72) Erfinder: **Lüdke, Josef Dr., Meyenburgerstrasse 49,**
**D-2800 Bremen 21(DE)**
Erfinder: **Eibel, Karl-Heinz, Heisenbergstrasse 19,**
**D-5014 Kerpen-Türnich(DE)**

(74) Vertreter: **Grosse, Rainer, Dipl.-Ing. et al, Patentanwalt**
**Silberburgstrasse 187, D-7000 Stuttgart 1(DE)**

**Beschreibung**

Die Erfindung betrifft eine als Surfbrett ausgebildete Fortbewegungsvorrichtung mit Windsegelantrieb und schwimmfähigem Grundkörper.

Als Surfbretter gestaltete Fortbewegungsvorrichtungen sind bekannt. Sie dienen zur Fahrt auf dem Wasser. Eine Lenkung des Surfbretts erfolgt durch Segelstellungsänderung und/oder Gewichtsverlagerung.

Ferner sind Fahrzeuge mit Gleitkurven bekannt, die das Segeln auf Eis gestatten. Auch kennt man Fahrzeuge mit Rädern, wobei der Antrieb über Windsegel erfolgt.

Aus der DE-A 3 339 883 geht hervor, ein Surfbrett mit einer Einrichtung zum Rudern oder Eissegeln zu versehen. Hierzu kann an dem Schwertkasten und/oder der Masthalterung des Surfbretts ein Längsträger lösbar befestigt werden, an dem ein sitz mit Fußstützen angeordnet ist.

Aus der französischen Patentanmeldung FR-A 2 529 525 geht ein Surfbrett hervor, dessen Rumpf aus mehreren Einzelteilen zusammensetzbar ist. Ein das Mastloch des Surfbretts aufweisendes Einzelteil, das einen Längsabschnitt des Rumpfs bildet, kann zum Landsegeln mit Rädern bestückt werden.

Die FR-A 2 537 508 zeigt ein Surfbrett, das sowohl zu Lande als auch zu Wasser verwendbar ist, wobei für den Landbetrieb Räder vorgesehen sind.

Schließlich geht aus der WO-A 8 000 146 ein vielseitig einsetzbarer Schwimmkörper hervor, der zum Windsurfen, zum Tretbootfahren, als Motorboot, als Raupen-Landfahrzeug und auch als Strandsegler benutzt werden kann. Hierzu weist er einen surfbrettähnlichen, schwimmfähigen Grundkörper auf, der sowohl im Bug- als auch im Heckbereich einen stufenförmigen, im Querschnitt kreisförmigen Durchbruch aufweist. In die Durchbrüche lassen sich zur Realisierung der unterschiedlichen Sportgeräte verschiedene Einsätze einstecken. So weist der Heckeinsatz beim Surfen eine Finne und beim Motorbootfahren eine einem Außenbordmotor ähnliche Antriebseinheit auf. Beim Tretbootfahren wird in den bugseitigen Einsatz ein Pedalantrieb mit Unterwasserpropeller eingesetzt. Beim Strandsegeln nimmt der bugseitige Einsatz sowohl den Mast, als auch Vorderräder und der heckseitige Einsatz einen Sitz und ein Hinterrad auf. Da das vielseitige Sportgerät auch zum Eissegeln eingesetzt werden kann, ist ein bugseitiger Einsatz vorgesehen, der eine Eiskufe aufweist. Im Heckbereich werden zwei voneinander beabstandete Eiskufen in entsprechende Aufnahmelöcher des Grundkörpers eingesteckt. Für jede der beschriebenen Varianten sind also spezielle Einsätze mit entsprechender Ausstattung erforderlich.

Dem Gegenstand der Erfindung liegt die Aufgabe zugrunde, eine Fortbewegungsvorrichtung der eingangs genannten Art zu schaffen, die bei einfachster Ausbildung eine universellen Einsatz bietet, wobei ein besonderer Fahrspaß möglich ist.

Diese Aufgabe wird erfindungsgemäß dadurch gelöst, daß sich auf der Grundkörperoberseite ein als Lenkscheibe ausgebildeter Lenker für eine Fußlenkung befindet, die mit austauschbaren Steuermitteln verbindbar ist. Mithin können für einen universellen Einsatz verschiedene Steuermittel, wie Finne, Lenkrad, Schneekufe oder Eiskufe, austauschbar an die durch Fußlenkung betätigbare Lenkscheibe befestigt werden. Die Lenk- und Halteeinrichtung für die austauschbaren Steuermittel bleibt somit stets dieselbe, so daß ein besonders einfacher und preiswerter Aufbau vorliegt. Andererseits läßt sich ein besonderer Fahrspaß dadurch erzielen, daß die austauschbaren Steuermittel während des Fahrbetriebs von dem Sportler zur Lenkung seiner Fortbewegungsvorrichtung herangezogen bzw. mit herangezogen werden können. Bei einfachster Konstruktion, die für die verschiedenen Einsatzzwecke nur einen geringfügigen Teileaustausch erfordert, ist somit ein besonderes Fahrvergnügen garantiert. Für den erhöhten Fahrspaß wird als Steuermittel für den Wasserbetrieb eine Ruderflosse (Finne), für den Festlandbetrieb ein Lenkrad bzw. für den Betrieb auf Eis oder Schnee eine Eis- oder Schneekufe eingesetzt, wobei auch scharfe Fahrtrichtungsänderungen besonders leicht durch die bevorzugt heckseitig angeordnete Fußlenkung vornehmbar sind. Letztere ist von der Grundkörperoberseite her mittels eines Fußes des Sportlers bequem erreich- und betätigbar.

Handhabungs- und strömungstechnische Vorteile ergeben sich dadurch, daß die Lenkscheibe derart integral in den Grundkörper eingelassen ist, daß ihre Oberfläche mit der Grundkörperoberseite fluchtet.

Ferner kann für eine verbesserte Fußlenkung die Oberseite der Lenkscheibe konvex gewölbt sein.

Ein weiterer Vorteil besteht darin, daß die Lenkscheibe mit einer zentralen Steuerachse verbunden ist, die im Grundkörper lagert und diesen durchsetzt und daß am freien Ende der Steuerachse das Steuermittel befestigbar ist.

Eine Alternative ist dadurch gekennzeichnet, daß die Lenkung arretierbar ist. sie kann dann bei Bedarf durch einfach zu bewerkstelligende Maßnahmen in bzw. außer Betrieb gesetzt werden.

Eine Lenkhilfe bei Verwendung der Fußlenkung wird dadurch erzielt, daß die Lenkscheibe eine Stellungsmarkierung aufweist.

Insbesondere weist die Fortbewegungsvorrichtung am Grundkörper Befestigungsvorrichtungen für austauschbare, mit Rädern, Eis- oder Schneekufen versehene Fahrgestelle auf, wobei eine Befestigungsvorrichtung mit dem Lenker verbunden ist, an der – wie bereits ausgeführt – für den Wasserbetrieb eine Ruderflosse, für den Festlandbetrieb ein Lenkrad bzw. für den Betrieb auf Eis- oder Schnee eine Eis- oder Schneekufe befestigbar ist.

Eine vorteilhafte Weiterbildung besteht darin, ein bugseitiges, zum Grundkörper quer verlaufendes Tragrohr zur Aufnahme einer Fahrachse vorzusehen. Das Tragrohr stellt ein kostengünstig herzustellendes Bauteil dar und läßt sich gut in den Gesamtaufbau des Grundkörpers einfügen. Es führt zu einer zusätzlichen Versteifung des Grundkörpers, so daß bei Landfahrt die auf den Grundkörper wirkenden Kräfte schadfrei aufgefangen werden.

Insbesondere erweist es sich dabei von Vorteil, daß das Tragrohr in den Grundkörper eingebettet ist. Es überragt also nicht störend den Aufbau des Grundkörpers, so daß auch der Betrieb auf Wasser durch das Tragrohr nicht beeinträchtigt ist.

Die Fahrachse kann bevorzugt ein- oder zweiteilig ausgebildet sein. Sie läßt sich in axialer Richtung mittels einsetzbarer Fixiermittel fixieren, so daß ein hohes Maß an Fahrsicherheit erzielt wird. Das Montieren und Demontieren der Fahrachse muß daher stets willensbetont erfolgen.

Bei Landfahrt wird eine hohe Lagenstabilität dadurch erreicht, daß auf der Fahrachse beidseitig des Grundkörpers jeweils ein Rad aufsteckbar gelagert ist.

Eine Mehrfachfunktion erfüllt die Fahrachse dadurch, daß für den Betrieb auf Eis oder Schnee beidseitig des Grundkörpers an der genannten Fahrachse jeweils eine Kufenaufnahme-Vorrichtung befestigbar ist, an der Eis- oder Schneekufen festlegbar sind. Durch diese Maßnahme werden Bauteile eingespart, die die Fertigungskosten für die Fortbewegungsvorrichtung niedrig halten.

Für eine hohe Lagenstabilität sind an der Befestigungsvorrichtung Zwillingsräder bzw. Doppelkufen befestigt.

Nachstehend wird ein Ausführungsbeispiel der Erfindung anhand der Figuren 1-12 erläutert, welche unterschiedliche Einsatzmöglichkeiten darstellen. Es zeigt:

Fig. 1 eine Seitenansicht der als Surfbrett gestalteten Fortbewegungsvorrichtung, eingestellt auf Wasserbetrieb,

Fig. 2 eine Draufsicht auf den Grundkörper der Fortbewegungsvorrichtung,

Fig. 3 einen Teillängsschnitt durch den Grundkörper im Bereich der abgewandelt gestalteten, eine kove gewölbte Oberseite ausbildenden Lenkscheibe,

Fig. 4 eine Seitenansicht der Fortbewegungsvorrichtung, welche für Landfahrt mit Rädern versehen ist,

Fig. 5 eine Draufsicht auf Fig. 4,

Fig. 6 eine Teildraufsicht auf das Surfbrett im Bereich der Lenkscheibe, welche eine Stellungsmarkieru aufweist und welche arretierbar ist,

Fig. 7 ebenfalls eine Seitenansicht der Fortbewegungsvorrichtung, welche nun mit Schneekufen versehen ist,

Fig. 8 die Draufsicht auf Fig. 7,

Fig. 9 eine Heckansicht der Fortbewegungsvorrichtung,

Fig. 10 die Fortbewegungsvorrichtung wiederum in Seitenansicht, welche zwecks Fahrt auf Eis mit Eiskufen versehen ist,

Fig. 11 die Draufsicht auf Fig. 10 und

Fig. 12 die Heckansicht dieser Fortbewegungsvorrichtung.

Die als Surfbrett ausgebildete Fortbewegungsvorrichtung 1 besitzt einen langgestreckten, vorzugsweise aus Kunststoff bestehenden Grundkörper 2. Für diesen ist Integralschaum verwedet. Er kann jedoch auch als Hohlkörper konstruiert sein. Der Bug 3 des Grundkörpers 2 läuft in einer Spitze 4 zusammen und weist einen nach oben gerichteten, leicht gewölbten Lauf auf. Das Heck 5 dagegen ist leicht abgerundet.

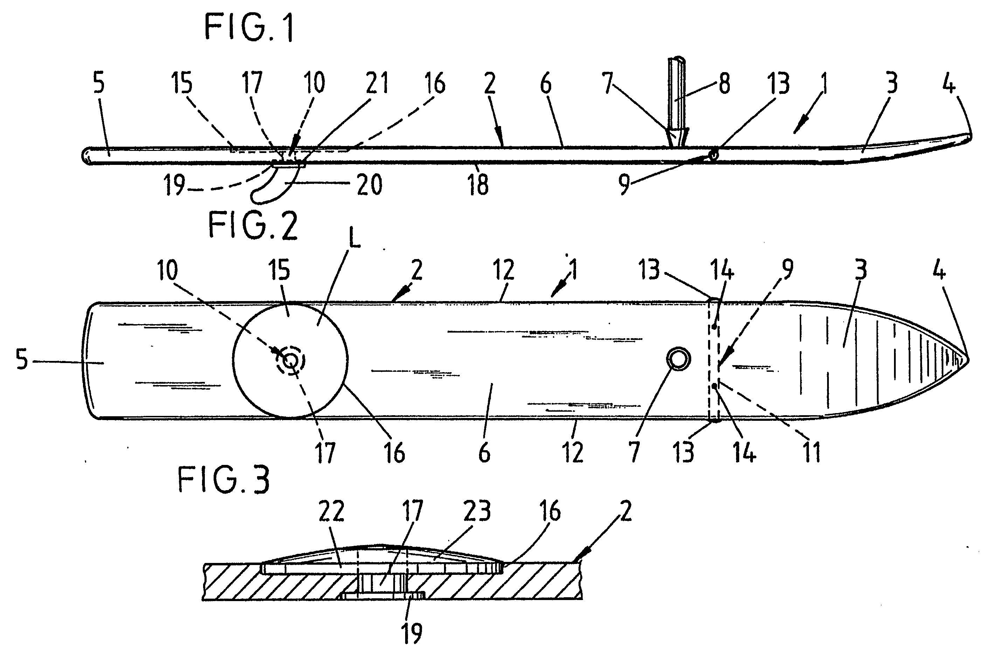

Außerhalb der Grundkörpermitte, dem Bug 3 näherliegend, befindet sich im Grundkörper 2 eine zur Grundkörperoberseite 6 hin weisende Aufnahmeeinrichtung 7 für einen in Fig. 1 schematisch veranschaulichten Mast 8, welcher zur Halterung eines nicht dargestellten Windsegels dient. Die Aufnahmeein richtung 7 ist so beschaffen, daß der Mast 8 in allen Richtungen bewegbar gehalten ist.

Der Grundkörper 2 weist Befestigungsvorrichtungen 9 und 10 auf, deren Verwendungszweck nachstehend erläutert wird. Bezüglich der Befestigungsvorrichtung 9 handelt es sich um ein bugseitiges, zum Grundkörper 2 querverlaufendes Tragrohr 11. Gemäß dem Ausführungsbeispiel ist das Tragrohr 11 in dem Grundkörper 2 eingebettet. Bei Verwendung als Wasserfahrzeug ist das Tragrohr 11 beiderends auf Höhe der Schmalkanten 12 des Grundkörpers 2 mittels Stopfen 13 flüssigkeitsdicht verschlossen. Aus Fig. 2 geht hervor, daß dem Tragrohr 11 zwei von der Grundkörperoberseite her zugängliche Befestigungsmittel 14 zugeordnet sind.

Die heckseitige Befestigungsvorrichtung 10 ist für eine Fußlenkung eingerichtet und mit einem von der Grundkörperoberseite 6 zugänglichen Lenker L verbunden. Dieser ist als Lenkscheibe 15 ausgebildet und derart in den Grundkörper 2 eingelassen, daß die Oberseite der Lenkscheibe 15 mit der Grundkörperoberseite 6 abschließt bzw. fluchtet. Zur Aufnahme der Lenkscheibe 15 dient eine durchmesserangepaßte, von der Oberseite 6 des Grundkörpers 2 ausgehende Aussparung 16. An der der Oberseite gegenüberliegenden Seite trägt die Lenkscheibe 15 in zentraler Anordnung eine Steuerachse 17. Letztere ist im Grundkörper 2 gelagert und durchsetzt diesen. An dem der Unterseite 18 benachbarten Ende trägt die Steuerachse 17 einen Kupplungsflansch 19. Bei Verwendung der Fortbewegungsvorrichtung als Wasserfahrzeug kann an dem Kupplungsflansch 19, welcher bündig mit der Unterseite 18 abschließt, eine Finne 20 bzw. Ruderflosse angeflanscht werden. Zu diesem Zweck bildet dieselbe einen Anschlußflansch 21 aus, der in Verbindung bringbar ist zum Kupplungsflansch 19. Wird auf die Finne 20 verzichtet, kann die als Surfbrett gestaltete Fortbewegungsvorrichtung in der üblichen Weise eingesetzt werden.

Aus Fig. 3 geht eine abgewandelt gestaltete Lenkscheibe 22 hervor. Diese weicht gegenüber der vorbeschriebenen Lenkscheibe 15 dadurch ab, daß die Oberseite 23 kovex gewölbt verläuft.

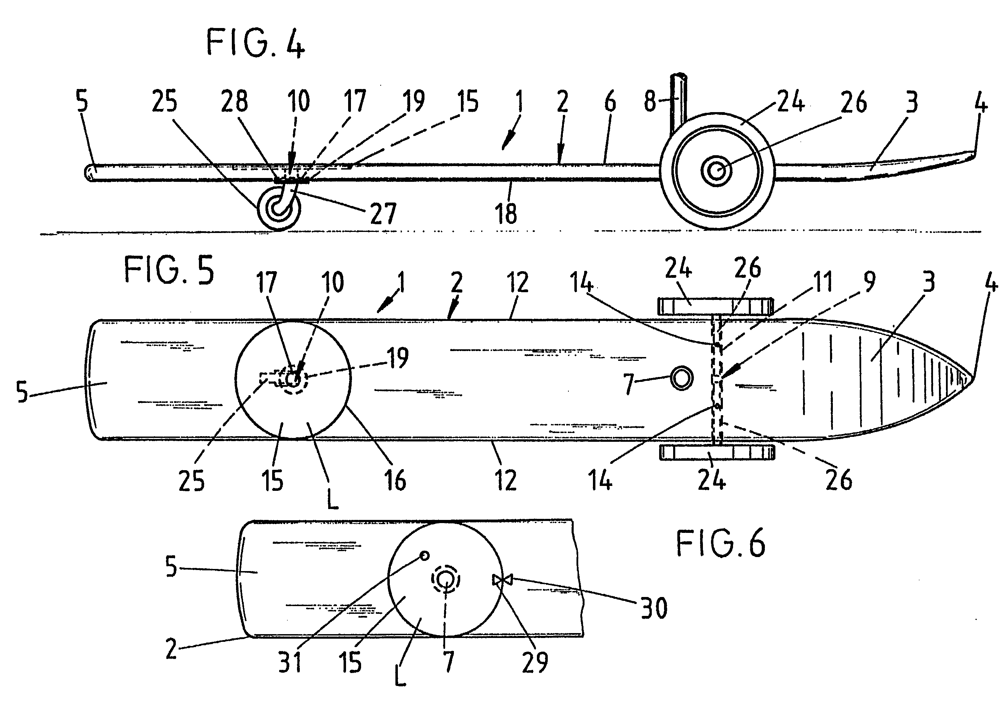

Gemäß Fig. 4 bis 5 ist die Fortbewegungsvorrichtung 1 mit Rädern 24, 25 bestückt. Zur Aufnahme der Räder 24 wird in das Tragrohr 11 eine zweiteilig ausgebildete Fahrachse 26 eingsteckt derart, daß ihre äußeren Enden die Schmalkanten 12 des Grundkörpers 2 überragen. Zur Fixierung der Fahrachse 26 in axialer Richtung dienen die Befestigungmittel 14, welche in entsprechende, nicht näher veranschaulichte Öffnungen der Fahrachse 26 eingreifen. Für den Festlandbetrieb ist auf der Fahrachse 26 beidseitig des Grundkörpers 2 jeweils ein Rad 24 aufsteckbar gelagert derart, daß das Abnehmen der Räder 24 eine willensbetonte Betätigung voraussetzt.

Bezüglich des Rades 25 handelt es sich um ein Lenkrad, welches der heckseitigen Befestigungsvorrichtung 10 zugeordnet wird. Das Lenkrad 25 ist mit einer Lenkgabel 27 versehen, die von einem Anschlußflansch 28 ausgeht. Letzterer entspricht in seinem Aufbau dem Anschlußflansch 21 für die Finne 20 und ist in gleicher Weise am Kupplungsflansch 19 festgelegt. Mit dem Drehen der Lenkscheibe 15 geht eine Lenkbewegung des Lenkrades 25 um eine vertikale Achse einher.

Wie Fig. 6 veranschaulicht, ist die Lenkscheibe 15 mit einer Stellungsmarkierung 29 versehen, welche mit einer grundkörperseitigen Festmarkierung 30 zusammenwirkt. Befinden sich beide Markierungen 29,30 in Gegenüberlage, wie es Fig. 6 herausstellt, entspricht dieses der Geradeausfahrt. Bei Bedarf kann diese Stellung der Lenkscheibe 15 durch einen abgefederten Sperrzapfen 31 arretiert werden.

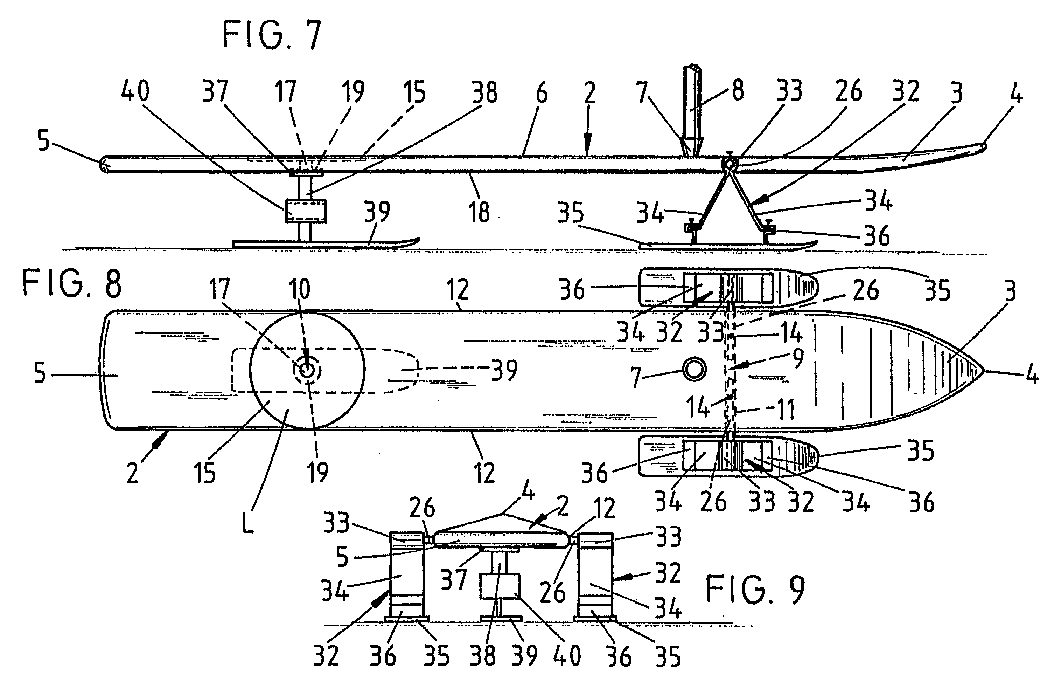

Bei der in Fig. 7 bis 9 veranschaulichten, für den Betrieb auf Schnee eingestellten Fortbewegungsvorrichtung ist beidseitig des Grundkörpers 2 an der Fahrachse 26 jeweils eine Kufenaufnahmevorrichtung 32 festgelegt. Diese weist einen Aufsteckflansch 33 auf, von welchem zwei einen spitzen Winkel zwischen sich einschließende Federbeine 34 ausgehen. Auf die in entgegengesetzter Richtung abgewinkelten Enden der Federbeine 34 sind zwei von einer Schneekufe 35 ausgehende Klemmschuhe 36 aufgesteckt.

Der Kupplungsflansch 19 der heckseitigen Befestigungsvorrichtung 10 ist nun mit einen Anschlußflansch 37 verbunden, der sich in einen abwärts gerichteten Träger 38 für eine Schneekufe 39 fortsetzt. Dieser Träger 38 enthält einen zwischengeschalteten Federungskörper 40, damit Stöße nicht unmittelbar in den Grundkörper 2 geleitet werden.

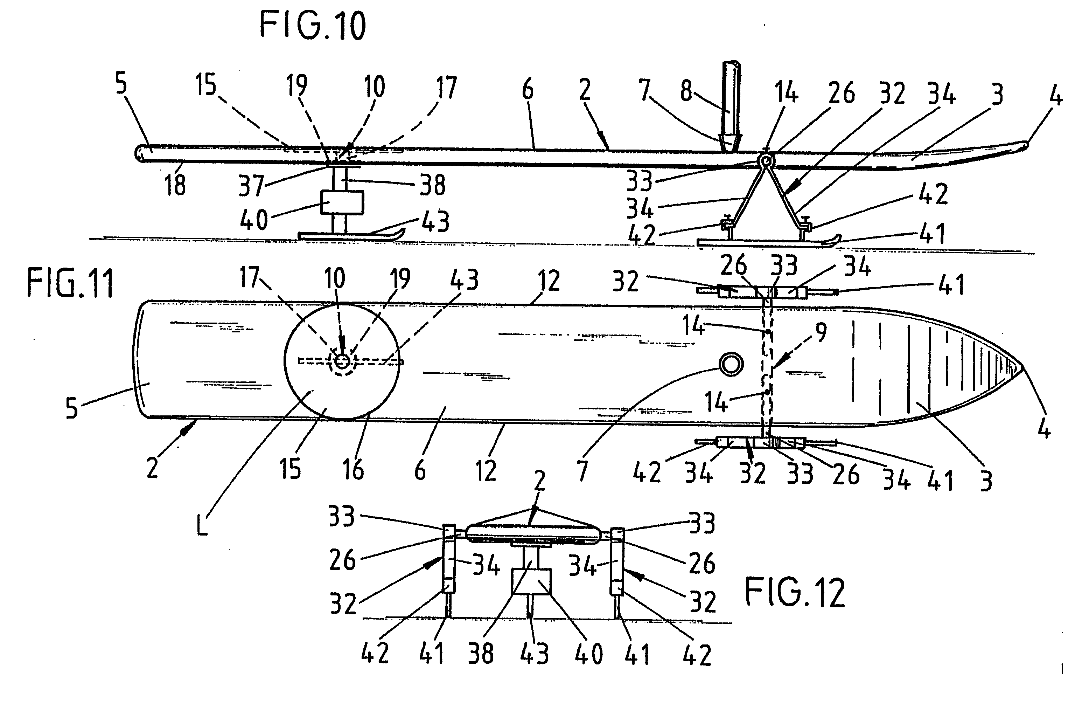

Bei der in den Figuren 10 bis 12 gezeigten Verwendung ist die Fortbewegungsvorrichtung für den Betrieb auf Eis eingestellt. Die beiden Kufenaufnahmevorrichtungen 32 entsprechen den vorbeschriebenen. Anstelle der Schneekufen werden nun Eiskufen 41 verwendet, die über Klemmschuhe 42 an den Kufenaufnahmevorrichtungen festgelegt sind. Ferner ist nun der Träger 38 mit einer Eiskufe 43 versehen. Letztere kann durch die Lenkscheibe 15 in ihrer Ausrichtung zum Grundkörper gedreht werden einhergehend mit einer Fahrtrichtungsänderung.

## Patentansprüche

1. Als Surfbrett ausgebildete Fortbewegungsvorrichtung (1) mit Windsegelantrieb und schwimmfähigem Grundkörper (2), dadurch gekennzeichnet, daß sich auf der Grundkörperoberseite (6) ein als Lenkscheibe (15, 22) ausgebildeter Lenker (L) für eine Fußlenkung befindet, der mit austauschbaren Steuermitteln (20, 25, 43, 39) verbindbar ist.

2. Fortbewegungsvorrichtung nach einem oder mehreren der vorhergehenden Ansprüche, dadurch gekennzeichnet, daß die Lenkscheibe (15) derart integral in den Grundkörper (2) eingelassen ist, daß ihre Oberseite mit der Grundkörperoberseite (6) fluchtet.

3. Fortbewegungsvorrichtung nach einem oder mehreren der vorhergehenden Ansprüche, dadurch gekennzeichnet, daß die Oberseite (23) der Lenkscheibe (22) konvex gewölbt ist.

4. Fortbewegungsvorrichtung nach einem oder mehreren der vorhergehenden Ansprüche, dadurch gekennzeichnet, daß die Lenkscheibe (15, 22) mit einer zentralen Steuerachse (17) verbunden ist, die im Grundkörper (2) gelagert ist und diesen durchsetzt und daß am freien Ende der Steuerachse (17) das Steuermittel (20, 25, 43, 39) befestigt ist.

5. Fortbewegungsvorrichtung nach einem oder mehreren der vorhergehenden Ansprüche, dadurch gekennzeichnet, daß die Lenkung arretierbar ist.

6. Fortbewegungsvorrichtung nach einem oder mehreren der vorhergehenden Ansprüche, dadurch gekennzeichnet, daß die Lenkscheibe (15) eine Stellungsmarkierung (29) aufweist.

7. Fortbewegungsvorrichtung nach einem oder mehreren der vorhergehenden Ansprüche, dadurch gekennzeichnet, daß der Grundkörper (2) Befestigungsvorrichtungen (9) für austauschbare, mit Rädern (24, 25), Eis- oder Schneekufen (41, 43, 35, 39) versehene Fahrgestelle aufweist und daß eine Befestigungsvorrichtung (10) mit dem Lenker (L) verbunden ist, an der für den Wasserbetrieb eine Ruderflosse (Finne 20), für den Festlandbetrieb ein Lenkrad (25) bzw. für den Betrieb auf Eis oder Schnee eine Eis- oder Schneekufe (43, 39) befestigbar ist.

8. Fortbewegungsvorrichtung nach einem oder mehreren der vorhergehenden Ansprüche, gekennzeichnet durch ein bugseitiges, zum Grundkörper (2) querverlaufendes Tragrohr (11) zur Aufnahme einer Fahrachse (26).

9. Fortbewegungsvorrichtung nach einem oder mehreren der vorhergehenden Ansprüche, dadurch gekennzeichnet, daß das Tragrohr (11) in dem Grundkörper (2) eingebettet ist.

10. Fortbewegungsvorrichtung nach einem oder mehreren der vorhergehenden Ansprüche, dadurch gekennzeichnet, daß die Fahrachse (26) ein- oder zweiteilig ausgebildet ist.

11. Fortbewegungsvorrichtung nach einem oder mehreren der vorhergehenden Ansprüche, dadurch gekennzeichnet, daß die Fahrachse (26) in axialer Richtung mittels einsetzbarer Befestigungsmittel (14) fixierbar ist.

12. Fortbewegungsvorrichtung nach einem oder mehreren der vorhergehenden Ansprüche, dadurch gekennzeichnet, daß für den Festlandbetrieb auf der Fahrachse (26) beidseitig des Grundkörpers (2) jeweils ein Rad (24) aufsteckbar gelagert ist.

13. Fortbewegungsvorrichtung nach einem oder mehreren der vorhergehenden Ansprüche, dadurch gekennzeichnet, daß für den Betrieb auf Eis oder Schnee beidseitig des Grundkörpers (2) an der Fahrachse (26) jeweils eine Kufenaufnahme-Vorrichtung (32) befestigbar ist, an der Eis- oder Schneekufen (41, 35) festlegbar sind.

14. Fortbewegungsvorrichtung nach einem oder mehreren der vorhergehenden Ansprüche, dadurch gekennzeichnet, daß an der Befestigungsvorrichtung (10) Zwillingsräder bzw. Doppelkufen befestigt sind.

## Claims

1. Locomotion device (1) designed as a surfboard with sail propulsion means and a flotable main body (2), characterised in that a steering means (L) for foot steering designed as a steering disc (15, 22) and connectable to exchangeable control means (20, 25, 43, 39) is located on the top surface (6) of said main body.

2. Locomotion device according to one or several of the preceding claims, characterised in that said steering disc (15) is integrally arranged in said main body (2) in such a manner that its top surface is flush with said top surface (6) of said main body.

3. Locomotion device according to one or several of the preceding claims, characterised in that the top surface (23) of said steering disc (22) is of convexly curved configuration.

4. Locomotion device according to one or several of the preceding claims, characterised in that said steering disc (15, 22) is connected to a central steering axle (17) which is mounted in said main body (2) and extends through the latter, and in that said control means (20, 25, 43, 39) is attached to the free end of said steering axle (17).

5. Locomotion device according to one or several of the preceding claims, characterised in that said steering is lockable.

6. Locomotion device according to one or several of the preceding claims, characterised in that said steering disc (15) comprises a position mark (29).

7. Locomotion device according to one or several of the preceding claims, characterised in that said main body (2) comprises attachment devices (9) for exchangeable chassis provided with wheels (24, 25), ice or snow runners (41, 43, 35, 39), and in that there is connected to said steering means (L) an attachment device (10) to which a rudder fin (fin 20) for operation on water, a steering wheel (25) for operation on land or an ice or snow runner (43, 39) for operation on ice or snow is attachable.

8. Locomotion device according to one or several of the preceding claims, characterised by a supporting tube (11) extending transversely to said main body (2) near the bow for receiving a drive axle (26).

9. Locomotion device according to one or several of the preceding claims, characterised in that said supporting tube (11) is embedded in said main body (2).

10. Locomotion device according to one or several of the preceding claims, characterised in that said drive axle (26) is of one- or two-part design.

11. Locomotion device according to one or several of the preceding claims, characterised in that said drive axle (26) is fixable in the axial direction by insertable attachment means (14).

12. Locomotion device according to one or several of the preceding claims, characterised in that for operation on land a wheel (24) is mountable on said drive axle (26) on either side of said main body (2).

13. Locomotion device according to one or several of the preceding claims, characterised in that for operation on ice or snow there is attachable to said drive axle (26) on either side of said main body (2) a runner-receiving device (32) on which ice or snow runners (4 1, 35) are fixable.

14. Locomotion device according to one or several of the preceding claims, characterised in that twin wheels or double runners are attached to said attachment device (10).

## Revendications

1. Appareil de locomotion (1) conformé en planche de surf, avec propulsion par voile et corps de base (2) flottable, caractérisé en ce que la face supérieure (6) du corps de base est munie d'un mécanisme de direction (L) conformé en plateau de direction (15, 22) pour une commande au pied lequel peut être relié à des organes de commande (20, 25, 43, 39) interchangeables.

2. Appareil de locomotion selon la revendication 1, caractérisé en ce que le plateau de direction (15) est entièrement intégré dans le corps de base (2) de telle façon que sa face supérieure est de niveau avec la face supérieure (6) du corps de base.

3. Appareil de locomotion selon l'une des revendications précédentes, caractérisé en ce que la face supérieure (23) du plateau de direction (22) présente une courbure convexe.

4. Appareil de locomotion selon l'une des revendications précédentes, caractérisé en ce que le plateau de direction (15, 22) est rattaché à un axe de commande central (17) monté dans le corps de base (2) et traversant celui-ci, et que l'organe de commande (20, 25, 43, 39) peut être fixé sur l'extrémité libre de l'axe de commande (17).

5. Appareil de locomotion selon l'une des revendications précédentes, caractérisé en ce que la direction peut être bloquée.

6. Appareil de locomotion selon l'une des revendications précédentes, caractérisé en ce que le plateau de direction (15) porte un marquage de position (29).

7. Appareil de locomotion selon l'une des revendications précédentes, caractérisé en ce que le corps de base (2) comporte des dispositifs de fixation (9) pour des châssis interchangeables équipés de roues (24, 25), de patins à glace ou de skis (41, 43, 35, 39), et qu'un dispositif de fixation (10) est relié au mécanisme de direction (L) et permet la fixation d'un aileron de gouvernail (quille 20) pour l'utilisation sur l'eau, une roue directrice (25) pour l'utilisation sur la terre ferme et respectivement un patin à glace ou un ski (43, 39) pour l'utilisation sur la glace ou sur la neige.

8. Appareil de locomotion selon l'une des revendications précédentes, caractérisé en ce qu'il comprend, du côté avant, un tube de support (11) orienté transversalement par rapport au corps de base (2) et destiné à recevoir un essieu (26).

9. Appareil de locomotion selon l'une des revendications précédentes, caractérisé en ce que le tube de support (11) est encastré dans le corps de base (2).

10. Appareil de locomotion selon l'une des revendications précédentes, caractérisé en ce que l'essieu (26) est réalisé en une ou deux parties.

11. Appareil de locomotion selon l'une des revendications précédentes, caractérisé en ce que l'essieu (26) peut être fixé dans le sens axial au moyen d'éléments de fixation (14) insérables.

12. Appareil de locomotion selon l'une des revendications précédentes, caractérisé en ce que, pour l'utilisation sur le terre ferme, de chaque côté du corps de base (2) respectivement une roue (24) peut être montée par emboîtement sur l'essieu (26).

13. Appareil de locomotion selon l'une des revendications précédentes, caractérisé en ce que, pour l'utilisation sur la glace ou sur la neige, l'essieu (26) peut recevoir respectivement, de part et d'autre du corps de base (2), un dispositif de fixation de patin (32) sur lequel peuvent être montés des patins à glace ou des skis (41, 35).

14. Appareil de locomotion selon l'une des revendications précédentes, caractérisé en ce que sur le dispositif de fixation (10) sont montés des roues et respectivement des patins jumelés.

FIG.1

FIG.2

FIG.3

FIG. 4

5   25   28   10   17   19   15   1   2   6   8   24   26   3   4

27   18

FIG. 5

17   10   1   2   12   14   24   26   11   9   3   4

5

7

25   15   L   16   12   14   24   26

FIG. 6

5

30

2   31   15   L   7   29

EP 0 286 859 B1

FIG. 7

40  37  17  19  15  38          6  2  7  8  33  26  32  3  4

5

18

39

35  34  34

36

FIG. 8

17  10          12  36                      26  35  3

5

39

34 32 33  14

7  9

15

2

19          12          14  11  35

L                          36  34  26  33 32  34  36

33  26  4  2  12  33

5                          32

34          37  26  34

FIG. 9

32  36  35  38  39  40  36  35

EP 0 286 859 B1

FIG.10

5   15   19   10   17          6   2   7   8   14   26   32   34   3   4

18   37          38          33
40          43                34   42
42          41

FIG.11          17   10   19   43   12          32   26   33   34   41

14
9
14

5

2   15   16   6   12   7   42   34   32   33   26   34   41   3   4

L

33   2   33
26          26

32   34   34   32          FIG.12

42   41   38   43   40   41   42

EP 0 286 859 B1